(19) Europäisches Patentamt
European Patent Office
Office européen des brevets

(11) EP 4 267 676 B1

(12) EUROPEAN PATENT SPECIFICATION

(45) Date of publication and mention of the grant of the patent:
**11.12.2024 Bulletin 2024/50**

(21) Application number: **21835866.1**

(22) Date of filing: **22.12.2021**

(51) International Patent Classification (IPC):
***C08L 71/12*** (2006.01) ***C08K 3/22*** (2006.01)
***C08L 25/06*** (2006.01) ***C08L 53/02*** (2006.01)

(52) Cooperative Patent Classification (CPC):
(C-Sets available)
**C08L 71/12** (Cont.)

(86) International application number:
**PCT/IB2021/062215**

(87) International publication number:
**WO 2022/137180 (30.06.2022 Gazette 2022/26)**

# (54) THERMOPLASTIC COMPOSITIONS WITH HIGH DIELECTRIC CONSTANT, HIGH HEAT RESISTANCE AND IMPROVED MECHANICAL PROPERTIES AND THE SHAPED ARTICLE THEREFORE

THERMOPLASTISCHE ZUSAMMENSETZUNGEN MIT HOHER DIELEKTRIZITÄTSKONSTANTE, HOHER WÄRMEBESTÄNDIGKEIT UND VERBESSERTEN MECHANISCHEN EIGENSCHAFTEN SOWIE FORMKÖRPER DAFÜR

COMPOSITIONS THERMOPLASTIQUES PRÉSENTANT UNE CONSTANTE DIÉLECTRIQUE ÉLEVÉE, UNE RÉSISTANCE ÉLEVÉE À LA CHALEUR ET DES PROPRIÉTÉS MÉCANIQUES AMÉLIORÉES ET ARTICLE FAÇONNÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2020 EP 20216593**

(43) Date of publication of application:
**01.11.2023 Bulletin 2023/44**

(73) Proprietor: **SHPP Global Technologies B.V.**
**4612 PX Bergen op Zoom (NL)**

(72) Inventors:
- **SONG, Shijie**
  **Shanghai (CN)**
- **WANG, Jian**
  **Shanghai (CN)**
- **DU, Yinlong**
  **Shanghai (CN)**

(74) Representative: **Modiano, Gabriella Diana**
**Modiano & Partners SA**
**Steinsdorfstraße 14**
**80538 München (DE)**

(56) References cited:
**EP-A1- 3 546 509** **EP-A1- 3 591 004**
**CN-A- 110 698 839** **CN-A- 110 776 729**
**US-A1- 2003 125 478** **US-A1- 2018 258 282**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 71/12, C08K 3/22, C08K 2003/2241, C08L 25/06, C08L 53/02, C08L 71/12**

**Description**

**FIELD OF THE DISCLOSURE**

The present disclosure relates to materials exhibiting high dielectric constant and low dissipation factor, and in particular to polyphenylene oxide-based materials these properties for phase shift antennae applications.

**BACKGROUND**

Described herein are materials useful for phase shifts of base stations. A phase shifter is a key component in a base station. Phase shifters comprise an electronic device that changes the phase of an incoming signal. A phase shifter may remotely tilt or adjust the transmission angle of antenna. Phase shifters are designed and manufactured in a number of different ways. Often, special engineering plastics with high dielectric constant dK and low dissipation factor DF properties are desirable. A polyphenyl ether such as polyphenylene oxide PPO represents a useful base resin to produce such plastics because of its excellent dielectric properties. Conventionally, PPO together with different loading of ceramic fillers have been compounded to meet different phases shifter design. However, PPO may be plagued with certain processing disadvantages.

Accordingly, there remains a need in the art for materials that exhibit high dielectric constant (DK), ultra-low dielectric loss tangent (DF), high heat resistance, easy processing and strong mechanical properties.

**SUMMARY**

The above-described and other deficiencies of the art are met by thermoplastic compositions comprising (a) from 10 wt. % to 60 wt. % of a first polyphenylene oxide PPC, wherein the first PPO has an intrinsic viscosity from 0.3 dL/ g to 0.5 dLg as measured in chloroform at 25°C using a viscometer ; (b) from wt. % to 10 wt. % of a second PPO with low degree of polymerization and an intrinsic viscosity between 0.1 dl/g and 0.3 dl/g as measured in chloroform at 25 °C using a viscometer; (c) from 0.5 wt. % to 10 wt. % of a general purpose polystyrene GPPS, (d) from 0.5 wt% to 10 wt% of an impact modifier; and (e) from 30 wt. % to 70 wt. % of an inorganic ceramic filler. A ratio of the first PPO and the second PPO to polystyrene is from 1:1 to 6:1. The combined weight percent value of all components does not exceed 100 wt. %, and all weight percent values are based on the total weight of the composition.

The above described and other features are exemplified by the following detailed description, examples, and claims.

DETAILED DESCRIPTION OF ILLUSTRATIVE EMBODIMENTS

The present disclosure may be understood more readily by reference to the following detailed description of desired embodiments and the examples included therein. In the following specification and the claims that follow, reference will be made to a number of terms which have the following meanings.

A phase shifter is a key component in a base station. The phase shifter may include a dielectric plate. Phase shifters often comprise special engineering plastics with high dielectric constant dK and low dissipation factor DF properties. Polyphenylene oxide PPO is a useful base resin to produce such plastics because of its excellent dielectric properties. Conventionally, PPO together with different loading of ceramic fillers have been compounded to meet different phases shifter design. However, PPO may be plagued with certain processing disadvantages. PPO itself is very difficult for melt process, and is often blended with polystyrene PS to get desired a melt flowability. This blending strategy unfortunately may sacrifice the heat resistance of a final plastic composition because the glass transition temperature of PS is only 90 °C. Modem phase shifter designs require a high Dk, high HDT, and high melt flowability concurrently. Traditional compositions have not met such demanding requirements.

United States Published Patent Application No. US 20180258282 discloses a composite comprising poly(arylene ether), a general purpose polystyrene, an impact modifier, and a ceramic filler exhibiting various Dk values while maintaining a low dissipation factor. These composites however do not exhibit a sufficiently high heat resistance.

Chinese Patent Application No. CN108164973A discloses a high-dielectric polyphenyl ether material comprising poly-p-phenylene oxide, shock resistant polystyrene (HIPS), a high-dielectric filling agent, an antioxidant, and a lubricant. These composites however do not exhibit a sufficiently high heat resistance as well as improved ductility and high flowability.

United States Published Patent Application No. US20090054553A1 discloses a dielectric filler and a thermoplastic polymer. Certain polyethylene ethers are not disclosed. These composites do not feature an impact modifier and do not exhibit a sufficiently high heat resistance or low dielectric loss as well as improved ductility and high flowability.

European Patent Application EP 3546509 discloses thermoplastic compositions comprising polymer resin,

thermally conductive filler, an impact modifier and dielectric ceramic filler. The compositions do not feature PPO with a low degree of polymerization and viscosity nor do the compositions exhibit sufficiently high heat resistance of the composite Chinese Patent Application CN 110698839 discloses high dielectric constant materials comprising polyphenyl ether and high impact polystyrene. European Patent Application EP 3591004 discloses compositions including poly(p-phenylene oxide), polystyrene, an impact modifier, a dielectric filler, and an impact promoter selected from polycarbonate-siloxane copolymer, a polyolefin-siloxane copolymer. United States Published Patent Application US 2003125478 discloses compositions comprising high glass transition temperature Tg amorphous thermoplastic polymer resin and a poly(arylene ether). The compositions do not feature a ceramic filler.

Thus although, PPO/GPPS blends are a suitable compositions with dielectric properties, the present disclosure combines a specific combination of PPO resins, GPPS, impact modifiers, and ceramic filler to optimize Dk, Df, heat resistance and ductility. Provided herein are polyphenylene oxide based-materials exhibiting high dielectric constant and low dissipation factor as well as maintained heat deflection temperature, namely, a heat deflection temperature greater than 170 °C.

Also within the scope of the disclosure are articles of manufacture prepared according to any of the methods described herein. For example, articles that can be produced using the materials and methods of the disclosure include those in the electrical field, for example, computer, antenna and lighting articles.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including matters of logic with respect to arrangement of steps or operational flow; plain meaning derived from grammatical organization or punctuation; and the number or type of embodiments described in the specification.

### *Thermoplastic Composition*

Aspects of the disclosure relate to thermoplastic composition comprising at least a base resin comprising polyphenylene oxide (PPO) and polystyrene (PS), an impact modifier, and a ceramic filler, as disclosed in claim 1.

In various aspects, the present disclosure provides composite materials useful for the manufacture of phase shifters that can adjust the transmission angle of antenna. These materials have been evaluated for dielectric properties, such as dielectric constant Dk and dissipation factor Df among others, at frequencies from about 1 GHZ and 120 GHz. These materials exhibit certain dielectric properties while maintaining a desirably high heat deflection temperature (that is, greater than 170 °C).

### *Polyphenylene Oxide*

The disclosed compositions may comprise a poly(arylene ether) such as a polyphenylene oxide PPO. The poly(arylene) ether may have a number average molecular weight of about 3,000 to about 30,000 g/mole (grams/mole) and a weight average molecular weight of about 30,000 to about 60,000 g/mole, as determined by gel permeation chromatography. The poly(arylene ether) may have an intrinsic viscosity of about 0.10 to about 0.60 deciliters per gram (dl/g), as measured in chloroform at 25 °C. It is also possible to utilize a high intrinsic viscosity poly(arylene ether) (PPO) and a low intrinsic viscosity poly(arylene ether)(PPO) in combination. Determining an exact ratio, when two intrinsic viscosities are used, will depend somewhat on the exact intrinsic viscosities of the poly(arylene ether) used and the ultimate physical properties that are desired. Particularly useful poly(arylene ether)s for many purposes are those which include molecules having a particular endgroup. containing end group, such as for example, -SH.

In various aspects, the disclosed composition may comprise a polyphenylene ether such as polyphenylene oxide (a "poly(p-phenylene oxide") PPO. PPO may describe polymers containing optionally substituted phenyl rings linked with oxygen (O) and can be used interchangeably with poly(p-phenylene ether) or poly (2,6 dimethyl-p-phenylene oxide). Further, the disclosed composition may comprise a specific combination of PPO resins that provide the composition with a balance of certain properties.

The composition comprises at least a first PPO and a second PPO. The first PPO may have a particular molecular weight. In further aspects, the first PPO may have a particular intrinsic viscosity. The first PPO has an intrinsic

viscosity of from about 0.3 to about 0.5 deciliters per gram (dl/g). In a further example, the first PPO may comprise a PPO having a high degree of polymerization. A high degree of polymerization may be characterized by a molecular weight greater than 20,000 daltons (Da). The molecular weight may be defined as a number average molecular weight $M_n$ (namely an $M_n$ greater than 20,000 Daltons when measured using gel permeation chromatography suing a polystyrene standard).

The composition includes from about 10 wt. % to about 60 wt. % of the first PPO, or from about 10 wt. % to about 40 wt. %, or from about 20 wt. % to about 50 wt. %, or from about 12 wt. % to about 55 wt. % of the first PPO based on the total weight of the composition. As provided herein, the disclosed composition also comprises a general purpose polystyrene. In some examples, the total PPO content and general purpose styrene GPPS (including polystyrene present as an impact modifier) may be present in a ratio of about 1:1 to about 5:1. In further examples, the PPO and GPPS are present in a ratio of PPO:GPPS of from 1:1 to 6:1.

The second PPO may have a particular molecular weight. In further aspects, the second PPO may have a particular intrinsic viscosity. In yet further aspects, second PPO may comprise a PPO having a low degree of polymerization. A low degree of polymerization may be characterized by a molecular weight less than 10,000 Daltons. The molecular weight may be defined as a number average molecular weight $M_n$, (namely a $M_n$ less than 10,000 Daltons when measured using gel permeation chromatography using a polystyrene standard). The second PPO has an intrinsic viscosity of from about 0.1 to about 0.3 deciliters per gram (dl/g) or from about 0.1 dl/g to about 0.2 dl/g. The second PPO may further exhibit a glass transition temperature that is greater than that of a GPPS component as described herein. Certain aspects of the composition include from about 0.5 wt. % to about 10 wt. % of the second PPO, or from about 0.5 wt. % to about 8 wt. %, or from about 0.5 wt. % to about 7 wt. %, or from about 1 wt. % to about 8 wt. %, or from about 2 wt. % to about 8 wt. % of the second PPO based on the total weight of the composition.

***Polystyrene***

The disclosed composition comprises a polystyrene polymer. The term "polystyrene" as used herein includes polymers prepared by bulk, suspension and emulsion polymerization, which contain at least 25% by weight of polymer precursors having structural units derived from a monomer of the formula (I):

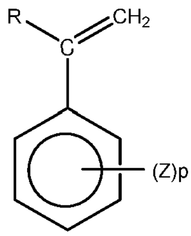

(I)

wherein R is hydrogen, lower alkyl or halogen; Z is vinyl, halogen or lower alkyl; and p is from 0 to about 5. These organic polymers include homopolymers of styrene, chlorostyrene and vinyltoluene, random copolymers of styrene with one or more monomers illustrated by acrylonitrile, butadiene, alpha -methylstyrene, ethylvinylbenzene, divinylbenzene and maleic anhydride, and rubber-modified polystyrenes including blends and grafts, wherein the rubber is a polybutadiene or a rubbery copolymer of about 98 to about 70 wt% styrene and about 2 to about 30 wt% diene monomer. Polystyrenes are generally miscible with polyphenylene ether. In certain aspects, the composition may comprise a general purpose polystyrene. The present composition comprises from about 0.5 wt. % to about 10 wt. % of a general purpose polystyrene.

As provided herein, a ratio of the first PPO and the second PPO to polystyrene is from 1:1 to 6:1, or from 1: 1 to 5:1. In the ratio, polystyrene may refer to the general purpose polystyrene as well as polystyrene present in the impact modifier described elsewhere herein.

***Impact Modifier***

The disclosed compositions comprise impact modifiers which may be high molecular weight elastomeric materials derived from olefins, monovinyl aromatic monomers, acrylic and methacrylic acids and their ester derivatives, as well as conjugated dienes that are fully or partially hydrogenated. The elastomeric materials can be in the form of homopolymers or copolymers, including random, block, radial block, graft, and core-shell copolymers.

A specific type of impact modifier may be an elastomer-modified graft copolymer comprising (i) an elastomeric (i.e., rubbery) polymer substrate having a Tg less than about 10 °C, less than about 0 °C, less than about -10 °C, or between about -40 °C to -80 °C, and (ii) a rigid polymer grafted to the elastomeric polymer substrate. Materials suitable for use as the elastomeric phase include, for example, conjugated diene rubbers, for example polybutadiene and polyisoprene; copolymers of a conjugated diene with less than about 50 wt % of a copolymerizable monomer, for example a monovinylic compound such as styrene, acrylonitrile, n-butyl acrylate, or ethyl acrylate; olefin rubbers such as ethylene propylene copolymers (EPR) or ethylene-propylene-diene monomer rubbers (EPDM); ethylene-vinyl acetate rubbers; silicone rubbers; elastomeric $C_1$-$C_8$ alkyl(meth)acrylates; elastomeric copolymers of $C_1$-$C_8$ alkyl(meth)acrylates with butadiene and/or styrene; or combinations comprising at least one of the foregoing elastomers. Materials suitable for use as the rigid phase include, for example, monovinyl aromatic monomers such as styrene and alpha-methyl styrene, and monovinylic monomers such as acrylonitrile, acrylic acid, methacrylic acid, and the $C_1$-$C_6$ esters of acrylic acid and methacrylic acid, specifically methyl methacrylate.

Specific impact modifiers include styrene-butadiene-styrene (SBS), styrene-butadiene rubber (SBR), styrene-ethylene-butadiene-styrene (SEBS), styrene ethylene propylene styrene (SEPS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN). A suitable SEBS impact modifier is high flow SEBS with a melt flow index that is greater than 3 g / 10 min at 230°C / 5 kg. In a specific example, the composition comprises a SEBS impact modifier comprising 40 percent by weight polystyrene.

Impact modifiers are included in the present composition in the amount of 0.5 wt. % to 10 wt. % based on the total weight of the composition. For example, the impact modifier may be present in the amount of 0.5 wt. % to 10 wt. %, 0.5 % to 8 wt.%, 2 wt. % to 10 wt. %, 2 wt. % to 8 wt. %.

***Ceramic Filler***

The present compositions include a ceramic filler. Such fillers may include, for example, molybdenum sulfide $MoS_2$, zinc sulfide ZnS, barium titanate $BaTiO_3$, calcium titanate $CaTiO_3$, barium ferrite $BaFe_{12}O_{19}$, barium sulfate BaSO4, heavy spar, titanium dioxide $TiO_2$, strontium titanate $SrTiO_3$, magnesium titanate $MgTiO_3$, zirconium dioxide $ZrO_2$, aluminum oxide $Al_2O_3$, or magnesium oxide MgO. In one aspect, the ceramic filler comprises $TiO_2$.

In some examples, the ceramic filler component may be present in the amount of about 40 wt. % to about 70 wt. %. In further examples, the ceramic filler may be present in an amount from 50 wt. % to about 60 wt. %, or from about 40 wt. % to 65 wt. %.

***Additives***

The composition can include various additives ordinarily incorporated into polymer compositions of this type, with the proviso that the additive(s) are selected so as to not significantly adversely affect the desired properties of the thermoplastic composition (good compatibility for example). Such additives can be mixed at a suitable time during the mixing of the components for forming the composition. The total amount of all of the additives in the resin composition can be, for example, 0.001 to 12 wt% each based on the total weight of the composition.

According to certain aspects, the polymer compositions may maintain mechanical performance and dielectric strength even with high levels of fillers (for example, greater than 30 wt. % filler based on the total weight of the polymer composition).

The composite disclosed herein can comprise one or more additional fillers. The filler can be selected to impart additional impact strength and/or provide additional characteristics that can be based on the final selected characteristics of the polymer composition. In some aspects, the filler(s) can comprise inorganic materials which can include clay, titanium oxide, asbestos fibers, silicates and silica powders, boron powders, calcium carbonates, talc, kaolin, sulfides, barium compounds, metals and metal oxides, wollastonite, glass spheres, glass fibers, flaked fillers, fibrous fillers, natural fillers and reinforcements, and reinforcing organic fibrous fillers. In certain aspects, the composite may comprise a glass fiber filler. In yet further aspects, the composite may be free or substantially free of a glass filler.

Appropriate fillers or reinforcing agents can include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, titanium dioxide, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents can be coated or surface treated, with silanes

for example, to improve adhesion and dispersion with the polymer matrix. Fillers generally can be used in amounts of 1 to 200 parts by weight, based on 100 parts by weight of based on 100 parts by weight of the total composition.

The additive composition can include a flow modifier, reinforcing agent, antioxidant, heat stabilizer, light stabilizer, ultraviolet light stabilizer, ultraviolet absorbing additive, plasticizer, lubricant, release agent, antistatic agent, antifog agent, antimicrobial agent, chain extender, colorant, de-molding agents, flow promoter, flow modifier, surface effect additive, radiation stabilizer, flame retardant, anti-drip agent, or any combination thereof.

Heat stabilizer additives include organophosphites (e.g. triphenyl phosphite, tris-(2,6-dimethylphenyl)phosphite, tris-(mixed mono-and di-nonylphenyl)phosphite or the like), phosphonates (e.g., dimethylbenzene phosphonate or the like), phosphates (e.g., trimethyl phosphate, or the like), or combinations comprising at least one of the foregoing heat stabilizers. The heat stabilizer can be tris(2,4-di-t-butylphenyl) phosphate available as IRGAPHOS™ 168. Heat stabilizers are generally used in amounts of 0.01 to 5 wt%, based on the total weight of polymer in the composition.

There is considerable overlap among plasticizers, lubricants, and mold release agents, which include, for example, glycerol tristearate (GTS), phthalic acid esters (e.g., octyl-4,5-epoxy-hexahydrophthalate), tris-(octoxycarbonylethyl)isocyanurate, tristearin, di- or polyfunctional aromatic phosphates (e.g., resorcinol tetraphenyl diphosphate (RDP), the bis(diphenyl) phosphate of hydroquinone and the bis(diphenyl) phosphate of bisphenol A); poly-alpha-olefins; epoxidized soybean oil; silicones, including silicone oils (e.g., poly(dimethyl diphenyl siloxanes); esters, for example, fatty acid esters (e.g., alkyl stearyl esters, such as, methyl stearate, stearyl stearate, and the like), waxes (e.g., beeswax, montan wax, paraffin wax, or the like), or combinations comprising at least one of the foregoing plasticizers, lubricants, and mold release agents. These are generally used in amounts of 0.01 to 5 wt%, based on the total weight of the polymer in the composition.

Light stabilizers, in particular ultraviolet light (UV) absorbing additives, also referred to as UV stabilizers, include hydroxybenzophenones (e.g., 2-hydroxy-4-n-octoxy benzophenone), hydroxybenzotriazines, cyanoacrylates, oxanilides, benzoxazinones (e.g., 2,2'-(1,4- phenylene)bis(4H-3,1-benzoxazin-4-one, commercially available under the trade name CYASORB™ UV-3638 from Cytec Industries Inc., Woodland, NJ), aryl salicylates, hydroxybenzotriazoles (e.g., 2-(2-hydroxy-5-methylphenyl)benzotriazole, 2-(2-hydroxy-5-tert-octylphenyl)benzotriazole, and 2-(2H-benzotriazol-2-yl)-4-(1,1,3,3-tetramethylbutyl)-phenol, commercially available under the trade name CYASORB™ 5411 from Cytec Industries Inc., Woodland, NJ) or combinations comprising at least one of the foregoing light stabilizers. The UV stabilizers can be present in an amount of 0.01 to 1 wt%, specifically, 0.1 to 0.5 wt%, and more specifically, 0.15 to 0.4 wt%, based upon the total weight of polymer in the composition.

Antioxidant additives include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants are used in amounts of 0.01 to 0.1 parts by weight, based on 100 parts by weight of the total composition, excluding any filler.

Useful flame retardants include organic compounds that include phosphorus, bromine, and/or chlorine. Non-brominated and non-chlorinated phosphorus-containing flame retardants can be preferred in certain applications for regulatory reasons, for example organic phosphates and organic compounds containing phosphorus-nitrogen bonds.

Inorganic flame retardants can also be used, for example salts of C1-16 alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate; salts such as $Na_2CO_3$, $K_2CO_3$, $MgCO_3$, $CaCO_3$, and $BaCO_3$, or fluoro-anion complexes such as $Li_3AlF_6$, $BaSiF_6$, $KBF_4$, $K_3AlF_6$, $KAlF_4$, $K_2SiF_6$, and/or $Na_3AlF_6$. When present, inorganic flame retardant salts are present in amounts of 0.01 to 10 parts by weight, more specifically 0.02 to 1 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. A TSAN comprises 50 wt% PTFE and 50 wt% SAN, based on the total weight of the encapsulated fluoropolymer. The SAN can comprise, for example, 75 wt% styrene and 25 wt% acrylonitrile based on the total weight of the copolymer. Antidrip agents can be used in amounts of 0.1 to 10 parts by weight, based on 100 parts by weight of the total composition, excluding any filler.

The resin compositions can be formed by techniques known to those skilled in the art. Extrusion and mixing techniques, for example, may be utilized to combine the components of the resin composition.

The resin compositions of the present disclosure can be blended with the aforementioned ingredients by a variety of methods involving intimate admixing of the materials with any additional additives desired in the formulation. Because of the availability of melt blending equipment in commercial polymer processing facilities, melt processing methods are generally preferred. Illustrative examples of equipment used in such melt processing methods include: co-rotating and counter-rotating extruders, single screw extruders, co-kneaders, disc-pack processors and various other types of extrusion equipment. The temperature of the melt in the present process is preferably minimized in order to avoid excessive degradation of the resins. It is often desirable to maintain the melt temperature between about 230 °C and about 350 °C in the molten resin composition, although higher temperatures can be used provided that the residence time of the resin in the processing equipment is kept short. In some embodiments the melt processed composition exits processing equipment such as an extruder through small exit holes in a die. The resulting strands of molten resin are cooled by passing the strands through a water bath. The cooled strands can be chopped into small pellets for packaging and further handling.

Compositions may be manufactured by various methods, including batch or continuous techniques that employ kneaders, extruders, mixers, and the like. For example, the composition can be formed as a melt blend employing a twin-screw extruder. In some embodiments at least some of the components are added sequentially. For example, the poly(arylene ether) component, the polystyrene component(s), and the impact modifier component can be added to the extruder at the feed throat or in feeding sections adjacent to the feed throat, or in feeding sections adjacent to the feed throat, while the filler component can be added to the extruder in a subsequent feeding section downstream. Alternatively, the sequential addition of the components may be accomplished through multiple extrusions. A composition may be made by preextrusion of selected components, such as the poly(arylene ether) component, the polystyrene component(s), and the impact modifier component to produce a pelletized mixture. A second extrusion can then be employed to combine the preextruded components with the remaining components. The filler component can be added as part of a masterbatch or directly. The extruder can be a two lobe or three lobe twin screw extruder.

In one aspect, the present disclosure pertains to plastic components, for example, that have been shaped, formed, or molded at least in part from the compositions described herein. Also provided are plastic components comprising a resin composition that is formed according to the presently disclosed methods for forming a resin composition.

### *Properties and Articles*

The disclosed compositions exhibit a balance among dielectric and physical properties. These compositions achieve a high Dk, low DF, high HDT and strong mechanical properties.

In certain aspects, the disclosed composites may exhibit certain dielectric properties. According to various aspects, such dielectric properties may be measured according to a resonant cavity method, where a hollow metal box is used to measure the properties at various frequencies on a molded sample.

A molded article or plaque comprising the composite may exhibit a dissipation factor Df (tan delta, $\varepsilon''/\varepsilon'$) less than 0.002 at frequencies of about 1 GHz to about 20 GHz or less than 0.003 at frequencies of about 20 GHz to about 120 GHz when measured according to a resonant cavity method. In further aspects, a molded article or plaque comprising the composite may exhibit a dielectric constant Dk greater than 5 at a frequency of 1.1 GHz when measured according to a resonant cavity method.

The disclosed compositions further exhibit high heat resistance, high flowability, and improved ductility. The compositions may exhibit a high heat resistance characterized by a heat deflection temperature of greater than 170 °C at 0.45 MPa or greater than 160 °C at 1.8 Mpa, when tested in accordance with ISO 75. The compositions may exhibit high flowability, characterized by a melt volume flow rate greater than 15 $cm^3$/10 minutes at 320 °C and 5 kilograms (kg) when tested in accordance with ISO 1133. Further, the compositions may exhibit improved ductility which may be characterized by the observed values for tensile elongation and impact strength. For example, tensile elongation greater than 2.5% when tested in accordance with ISO 527 and notched Izod impact strength greater than 5 $KJ/m^2$.

In various aspects, the present disclosure relates to articles comprising the compositions herein. The compositions can be molded into useful shaped articles by a variety of means such as injection molding, extrusion, rotational molding, blow molding and thermoforming to form articles. The compositions can be useful in the manufacture of articles requiring materials with good flow, good impact strength, and good dielectric strength. The compositions may be useful for as well as electrically conducting purposes.

In various aspects, the present disclosure provides composite materials useful for the manufacture of phase shifters for base stations than can adjust the incident transmission angle of an antenna in a base station. These materials have been evaluated for dielectric properties, such as dissipation factor Df, among others, at frequencies from about 10 GHz and 120 GHz. The disclosed compositions may be useful as a dielectric plate for a phase shifter for a 5G base station.

The advantageous characteristics of the compositions disclosed herein make them appropriate for an array of uses.

## Methods of Manufacture

Aspects of the disclosure further relate to methods for making a thermoplastic composition. The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

Methods may further comprise processing the composite to provide a plaque of a desired thickness. Plaques can be extruded, injection molded, compression molded, or injection-compression molded, and may have a thickness between about 0.5 mm and 6 mm. Other processes could also be applied to the thin thermoplastic film, including but not limited to, lamination, co-extrusion, thermo-forming or hot pressing. In such aspects, further layers of other materials (for example, other thermoplastic polymer layers, metallic layers, etc.) could be combined with the composite.

Various combinations of elements of this disclosure are encompassed by this disclosure, for example, combinations of elements from dependent claims that depend upon the same independent claim.

## Definitions

It is also to be understood that the terminology used herein is for the purpose of describing particular aspects only and is not intended to be limiting. As used in the specification and in the claims, the term "comprising" can include the embodiments "consisting of" and "consisting essentially of." Unless defined otherwise, all technical and scientific terms used herein have the same meaning as commonly understood by one of ordinary skill in the art to which this disclosure belongs. In this specification and in the claims, which follow, reference will be made to a number of terms which shall be defined herein.

As used in the specification and the appended claims, the singular forms "a," "an" and "the" include plural referents unless the context clearly dictates otherwise. Thus, for example, reference to "a thermoplastic polymer component" includes mixtures of two or more thermoplastic polymer components. As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each

unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional processes" means that the additional processes can or cannot be included and that the description includes methods that both include and that do not include the additional processes.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding aspects to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt.% values are based on the total weight of the composition. It should be understood that the sum of wt.% values for all components in a disclosed composition or formulation is 100.

As used herein, the terms "number average molecular weight" or "Mn" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "weight average molecular weight" or "Mw" can be used interchangeably, and are

defined by the formula:

$$M_w = \frac{\sum N_i M_i^{\,2}}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, for example, polycarbonate polymers, by methods well known to a person having ordinary skill in the art using molecular weight standards, for example, polycarbonate standards or polystyrene standards, preferably certified or traceable molecular weight standards.

As used herein, degree of polymerization, n, may describe the number of monomeric units (or repeating units) in a given polymer molecule.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of mixing conditions, e.g., component concentrations, extruder design, feed rates, screw speeds, temperatures, pressures and other mixing ranges and conditions that can be used to optimize the product purity and yield obtained from the described process. Only reasonable and routine experimentation will be required to optimize such process conditions.

Various PPO composition samples were prepared from the materials presented in Table 1. Intrinsic viscosity (IV) as described herein may be determined according to a process of dissolving the polymer (such as PPO) in a suitable solvent (such as chloroform) to form multiple specimens having varying concentration at an appropriate temperature (for example, room temperature RT or 25 °C). The viscosity of each specimen may be measured using a viscometer at 25 °C (or RT). Intrinsic viscosity may be found by plotting the viscosity as a function of the concentration and extrapolating back to a value of zero concentration. In a specific example, the intrinsic viscosity may be obtained in chloroform at 25 °C.

Table 1. Materials for compositions.

| Item | Supplier | Type |
|---|---|---|
| Polyphenylene oxide 803, 0.40 dl/g intrinsic viscosity (IV) (PPO1); molecular weight greater than 20,000 Da | SABIC | Resin, PPO |
| General purpose polystyrene (GPPS) | SABIC | Resin, PS |
| Polyphenylene oxide SA120, 0.12 dl/g IV (PPO2) | SABIC | Resin, PPO |
| Titanium dioxide for polyphenylene oxide; $TiO_2$ coated especially for PPO | Chemours | Ceramic Filler |
| Styrene-ethylene-butadiene-styrene (SEBS) G1651 (PS block content 30-33%, Melt index (MI) 0 at 230 °C/5kg) | Kraton | Impact Modifier |
| SEBS G1652 (PS block content 29-30.8%, MI, 5 at 230 °C/5kg) | Kraton | Impact Modifier |
| SEBS A1535 (PS block content 56.3-60.3%, MI, <1 at 230 °C/5kg) | Kraton | Impact Modifier |

(continued)

| Item | Supplier | Type |
|---|---|---|
| SEBS A1536 (PS block content 42%, MI, 7 at 260 °C/5kg) SEBS with 60% PS block | Kraton | Impact Modifier |
| Linear low density polyethylene (LLDPE) | SABIC | Mold release |
| Phosphite stabilizer, Tris(2,4-di-t-butvlphenyl)phosphite | BASF | Anti-oxidant 1 |
| Zinc sulfide (ZnS) | Sachtleben | Anti-oxidant 2 |

Compounding processes were performed on a lab extruder (Toshiba TEM-37BS). If not specifically been noted, all the base resin, impact modifier, additive and ceramic fillers were fed from the extruder throat. The compounding was run with a screw rotations at 300 RPM and 30-40 kg/h output, normally torque will be around 50-60%. The temperature profiles and molding conditions are shown in Table 2 and 3.

Table 2. Temperature profiles for compounding.

| Parameters | Unit | Extrusion Condition |
|---|---|---|
| Compounder Type | \ | TEM-37BS |
| Barrel Size | mm | 1500 |
| Die | mm | 3 |
| Feed (Zone 0) Temp | \ | 50 |
| Zone 1 Temp | °C | 150 |
| Zone 2 Temp | °C | 280 |
| Zone 3 Temp | °C | 280 |
| Zone 4 Temp | °C | 280 |
| Zone 5 Temp | °C | 280 |
| Zone 6 Temp | °C | 280 |
| Zone 7 Temp | °C | 290 |
| Zone 8 Temp | °C | 290 |
| Zone 9 Temp | °C | 290 |
| Zone 10 Temp | °C | 290 |
| Zone 11 Temp | °C | 290 |
| Die Temp | °C | 290 |

Table 3. Injection molding conditions.

| Molding parameters | unit | Value |
|---|---|---|
| Pre-drving time | Hour | 4 |
| Pre-drving temp | °C | 120 |
| Hopper temp | °C | 50 |
| Zone 1 temp | °C | 280 |
| Zone 2 temp | °C | 290 |
| Zone 3 temp | °C | 300 |
| Nozzle temp | °C | 300 |
| Mold temp | °C | 120-140 |

Properties of the prepared compositions were evaluated as follows. Tensile properties were measured according to ISO 527 method using the test speed of 5mm/min. Impact tests were performed according to ISO 180, under room temperature, with Pendulum Energy 5 lbf/ft. HDT was measured using method ISO 75, under stress of 0.45MPa and 1.82MPa with the part thickness of 4.0 mm. Dielectric constant (DK) and dissipation factor (DF) at fixed frequencies were tested on molded samples using a split post dielectric resonator (SPDR) and network analyzer. MVR were measured according to ISO 1133, under the loading of 5kg and 320°C

Comparative formulations C1, C2, and C3 are presented in Table 4. The compositions include only a first PPO1 (higher IV). Physical and dielectric properties of the comparative samples are also presented in Table 4. The desirable value for each testing parameter is shown under the column "SPEC." These values are attributed to materials that are useful in phase shift design. For example, a dielectric constant Dk of 5.5 at 1.1Ghz with 0.15 variance, a Df less than 0.002 at 1.1 GHz, and an HDT greater than 170 °C at 0.45Mpa, while maintaining a melt volume flow rate MVR greater than 15 $cm^3$/10 minutes.

Table 4. Physical and dielectric properties of comparative PPO/GPPS compositions.

| **Item Description** | | **Unit** | | **C1** | **C2** | **C3** |
|---|---|---|---|---|---|---|
| PPO1 | | % | | 33.9 | 32.9 | 31.9 |
| GPPS | | % | | 6 | 8 | 10 |
| $TiO_2$ for PPO | | % | | 55 | 55 | 55 |
| SEBS G1652 | | % | | 4 | 3 | 2 |
| LLDPE | | % | | 0.5 | 0.5 | 0.5 |
| Anti-oxide (Phosphite Stabilizer and ZnS) | | % | | 0.6 | 0.6 | 0.6 |
| | | | | | | |
| Total GPPS loading | | % | | 7.2 | 8.9 | 10.6 |
| **Test Item** | **Unit** | **Test Method** | **SPEC** | | | |
| HDT at 0.45Mpa | °C | ISO 75 | **>170** | 180 | 175 | 170 |
| HDT at 1.8Mpa | °C | ISO 75 | **>160** | 168 | 164 | 160 |
| Notched Izod | $KJ/m^2$ | ISO 180 | **>5** | 10.3 | 10.2 | 9.2 |
| Unnotched Izod | $KJ/m^2$ | ISO 180 | \ | 33.8 | 23.4 | 23.4 |
| Tensile Modulus | Mpa | ISO 527 | \ | 4000 | 4300 | 4600 |
| Tensile Strength | Mpa | ISO 527 | **>40** | 56 | 63 | 68 |
| Tensile Elongation | % | ISO 527 | **>2.5** | 5.3 | 4.8 | 4.5 |
| DK | 1.1 Ghz | SPDR | **5.5+-0.15** | 5.54 | 5.6 | 5.6 |
| DF | 1.1 Ghz | SPDR | **<0.002** | 0.0013 | 0.0012 | 0.0012 |
| MVR (320°C, 5kg) | $cm^3$/10min | ISO 1133 | **>15** | 6.7 | 7 | 8.2 |

According to our previous study on the regression curve of Dk versus titanium dioxide in PPO, 55%wt titanium dioxide were calculated to meet a Dk value of 5.5. To study the balance between HDT and MVR, different loading of GPPS and SEBS were compounded and results are shown as C1, C2 and C3. The SEBS used here included about 30%wt PS block, the total GPPS content in the formula by weight is also shown in Table 4.

The results indicated that while many of the desirable values are achieved, the observed balance among HDT and MVR suggests that as the MVR values increased the HDT property declined. C3 shows that with overall GPPS loading of 10.6% by weight, the HDT has reached boundary, meaning that any additional GPPS would be too detrimental to the observed HDT (decreased below threshold of 170 °C). And, the MVR of C3 was only 8.2 $cm^3$/10min, well below the desired value of 15 $cm^3$/10min. Thus, the comparative samples demonstrate that decreasing the amount of GPPS improved HDT but diminished MVR.

Further samples were prepared. Table 5 shows the physical and dielectric property of PPO, PPO SA120 and GPPS based new formulation.

Table 5. Physical and dielectric properties of PPO/SA120/GPPS resins.

| Item Description | | Unit | | C1 | E1 | E2 |
|---|---|---|---|---|---|---|
| PPO1 | | % | | 33.9 | 28.9 | 26.9 |
| PPO2 | | % | | | 5 | 7 |
| GPPS | | % | | 6 | 6 | 6 |
| $TiO_2$ for PPO | | % | | 55 | 55 | 55 |
| SEBS G1652 | | % | | 4 | 4 | 4 |
| LLDPE | | % | | 0.5 | 0.5 | 0.5 |
| Anti-oxide (Phosphite Stabilizer and ZnS) | | % | | 0.6 | 0.6 | 0.6 |
| Total GPPS loading | | % | | 7.2 | 7.2 | 7.2 |
| **Test Item** | **Unit** | **Test Method** | **SPEC** | | | |
| HDT at 0.45Mpa | °C | ISO 75 | **>170** | 180 | 172 | 171 |
| HDT at 1.8Mpa | °C | ISO 75 | **>160** | 168 | 162 | 160 |
| Notched Izod | $KJ/m^2$ | ISO 180 | **>5** | 10.3 | 8 | 7.5 |
| Unnotched Izod | $KJ/m^2$ | ISO 180 | \ | 33.8 | 22 | 21 |
| Tensile Modulus | Mpa | ISO 527 | \ | 4000 | 4200 | 4200 |
| Tensile Strength | Mpa | ISO 527 | **>40** | 56 | 63 | 66 |
| Tensile Elongation | % | ISO 527 | **>2.5** | 5.3 | 3.1 | 3.0 |
| DK | 1.1 Ghz | SPDR | **5.5+-0.15** | 5.54 | 5.6 | 5.6 |
| DF | 1.1 Ghz | SPDR | **<0.002** | 0.0013 | 0.0012 | 0.0012 |
| MVR (320°C, 5kg) | $cm^3/10min$ | ISO 1133 | **>15** | 6.7 | 13 | 21 |

C1 was the control sample without SA120 and E1 and E2 are example compositions with 5% and 7% SA120 by weight, respectively. With the addition of PPO2 (SA120), there forms a new balance between HDT and MVR. The sample having 5% PPO2 exhibits an almost doubled MVR while HDT is still greater than 170 °C. Further increasing SA120 to 7% by weight further improved the MVR to 21 and HDT is still maintained over 170 °C. Compared with C3 in Table 4, E2 exhibited a similar HDT level but the melt flowability increased significantly.

Various impact modifiers were also evaluated for their affect on the properties of the compositions as shown in Table 6. Table 6 also presents the ratio of total PPO to GPPS (including the polystyrene block in the impact modifier).

| Item Description | Unit | E3 | E4 | E5 | E6 |
|---|---|---|---|---|---|
| PPO1 | % | 29.9 | 29.9 | 29.9 | 29.9 |
| PPO2 | % | 5 | 5 | 5 | 5 |
| GPPS | % | 6 | 6 | 6 | 6 |
| $TiO_2$ for PPO | % | 55 | 55 | 55 | 55 |
| SEBS G1652 | % | 3 | - | - | - |
| SEBS G1651 | % | - | 3 | - | - |
| SEBS A1535 | % | - | - | 3 | - |
| SEBS A1536 | % | - | - | - | 3 |
| LLDPE | % | 0.5 | 0.5 | 0.5 | 0.5 |
| Anti-oxide | % | 0.6 | 0.6 | 0.6 | 0.6 |

(continued)

| Item Description | | Unit | E3 | E4 | E5 | E6 |
|---|---|---|---|---|---|---|
| PPOEGPPS | | | 5 | 5 | 4.85 | 4.52 |
| **Test Item** | **Unit** | **Test Method** | | | | |
| HDT at 0.45Mpa | °C | ISO 75 | 175 | 174 | 174 | 174 |
| HDT at 1.8Mpa | °C | ISO 75 | 163 | 164 | 163 | 163 |
| Notched Izod | $KJ/m^2$ | ISO 180 | 7.1 | 6.9 | 6.5 | 7.6 |
| Unnotched Izod | $KJ/m^2$ | ISO 180 | 45 | 39.8 | 35.9 | 38.3 |
| Tensile Modulus | Mpa | ISO 527 | 4235 | 4535 | 4592 | 4446 |
| Tensile Strength | Mpa | ISO 527 | 67 | 64 | 70.5 | 67.4 |
| Tensile Elongation | % | ISO 527 | 2.9 | 2 | 3.2 | 3.25 |
| DK | 1.1 Ghz | SPDR | 5.55 | 5.64 | 5.65 | 5.64 |
| DF | 1.1 Ghz | SPDR | 0.0016 | 0.0016 | 0.0016 | 0.0017 |
| MVR (320°C, 5kg) | $cm^3/10min$ | ISO 1133 | 11.3 | 9.2 | 10 | 11 |

By comparing G type and A type SEBS in Table 6, type A SEBS achieved a higher ductility than type G as evidenced by the higher tensile elongation rate. Other properties were essentially consistent for type G and type A type. Thus type A SEBS was more effective to improve the ductility in high Dk PPO compounds.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the disclosure should be determined with reference to the appended claims.

It will be apparent to those skilled in the art that various modifications and variations can be made in the present disclosure without departing from the scope of the disclosure. Other embodiments of the disclosure will be apparent to those skilled in the art from consideration of the specification and practice of the disclosure disclosed herein. It is intended that the specification and examples be considered as exemplary only, with a true scope of the disclosure being indicated by the following claims.

The patentable scope of the disclosure is defined by the claims, and can include other examples that occur to those skilled in the art. Such other examples are intended to be within the scope of the claims if they have structural elements that do not differ from the literal language of the claims.

## Claims

**1.** A thermoplastic composition comprising:

a. from 10 wt. % to 60 wt. % of a first polyphenylene oxide (PPO), wherein the first PPO has an intrinsic viscosity from 0.3 dl/g to 0.5 dl/g as measured at 25°C in chloroform using a viscometer;
b. from 0.5 wt. % to 10 wt. % of a second PPO with low degree of polymerization and an intrinsic viscosity between 0.1 dl/g and 0.3 dl/g as measured in chloroform at 25 °C using a viscometer;
c. from 0.5 wt. % to 10 wt. % of a general purpose polystyrene (GPPS)
d. from 0.5 wt% to 10 wt% of an impact modifier; and
e. from 30 wt. % to 70 wt. % of an inorganic ceramic filler,

wherein a ratio of the first PPO and the second PPO to polystyrene is from 1:1 to 6:1, and wherein the combined weight percent value of all components does not exceed 100 wt. %, and all weight percent values are based on the total weight of the composition.

2. The thermoplastic composition according to claim 1, wherein the first PPO has a high degree of polymerization.

3. The thermoplastic composition according to claim 1 or 2, wherein the second PPO has a number average molecular weight less than 10,000 Daltons as determined using gel ger permeation chromatography based on a polystyrene standards.

4. The thermoplastic composition according to any of claims 1-3, wherein the impact modifier comprises: an ethylene-propylene rubber; a maleic anhydride grafted polyethylene; a maleic anhydride functionalized copolymer; acrylic rubber (ACR); methylmethacrylate-butadiene-styrene terpolymer (MBS); ethylene-co-glycidyl methacrylate (EGMA); ethylene-methyl acrylate with glycidyl methacrylate (EMAGMA); styrene-butadiene-styrene (SBS); styrene-ethylene-butadiene-styrene (SEBS); a polyester ether elastomer; ethylene ethyl acrylate; or a combination thereof.

5. The thermoplastic composition according to any of claims 1-4, wherein the impact modifier comprises a styrene-ethylene-butadiene-styrene (SEBS) having greater than 40 percent by weight of a polystyrene block copolymer.

6. The thermoplastic composition according to any of claims 1 to 5, wherein the inorganic ceramic filler comprises $TiO_2$, $BaTiO_3$, $SrTiO_3$, $CaTiO_3$, $MgTiO_3$, $Al_2O_3$, $ZrO_2$, or a combination thereof.

7. The thermoplastic composition according to any of claims 1 to 5, wherein the inorganic ceramic filler comprises titanium dioxide.

8. The thermoplastic composition according to any of claims 1 to 7, wherein the thermoplastic composition exhibits a dielectric constant Dk greater than 3.5 when observed at a frequency of 1.1 GHz according to a resonant cavity method.

9. The thermoplastic composition according to any of claims 1 to 8, wherein the thermoplastic composition exhibits a dielectric loss tangent Df less than 0.0003 when observed at a frequency of 1.1 GHz according to a resonant cavity method.

10. The thermoplastic composition according to any of claims 1 to 8, wherein the thermoplastic composition exhibits a dielectric loss tangent Df less than 0.0002 when observed at a frequency of 1.1 GHz according to a resonant cavity method.

11. The thermoplastic composition according to any one of claims 1 to 10, wherein the thermoplastic composition exhibits a heat deflection temperature greater than 170 °C when tested in accordance with ISO 75.

12. The thermoplastic composition according to any of claims 1 to 11, wherein the thermoplastic composition further comprises at least one additional additive, wherein the at least one additional additive comprises a filler, acid scavenger, anti-drip agent, antioxidant, antistatic agent, chain extender, colorant, de-molding agent, flow promoter, lubricant, mold release agent, plasticizer, quenching agent, flame retardant, UV reflecting additive, or combinations thereof.

13. An article formed from the thermoplastic composition according to any of claims 1 to 12.

14. The article according to claim 13, wherein the article is a dielectric plate for a phase shifter.

**Patentansprüche**

1. Eine thermoplastische Zusammensetzung, die Folgendes umfasst:

a. 10 bis 60 Gewichtsprozent eines ersten Polyphenylenoxids (PPO), wobei das erste PPO eine Grenzviskosität von 0,3 dl/g bis 0,5 dl/g hat, gemessen bei 25°C in Chloroform unter Verwendung eines Viskosimeters;
b. 0,5 bis 10 Gewichtsprozent eines zweiten PPOs mit niedrigem Polymerisationsgrad und einer Grenzviskosität

zwischen 0,1 dl/g und 0,3 dl/g, gemessen in Chloroform bei 25°C unter Verwendung eines Viskosimeters;
c. 0,5 bis 10 Gewichtsprozent eines Standard-Polystyrols (general purpose polystyrene, GPPS)
d. 0,5 bis 10 Gewichtsprozent eines Elastifikators und
e. 30 bis 70 Gewichtsprozent eines anorganischen Keramik-Füllstoffs,

wobei ein Verhältnis des ersten PPOs und des zweiten PPOs zu Polystyrol von 1:1 bis 6:1 beträgt und wobei der kombinierte Gewichtsprozentwert aller Komponenten 100 Gewichtsprozent nicht überschreitet und alle Gewichtsprozentwerte auf dem Gesamtgewicht der Zusammensetzung basieren.

**2.** Die thermoplastische Zusammensetzung gemäß Anspruch 1, wobei das erste PPO einen hohen Polymerisationsgrad hat.

**3.** Die thermoplastische Zusammensetzung gemäß Anspruch 1 oder 2, wobei das zweite PPO ein Zahlenmittel-Molekulargewicht von weniger als 10.000 Dalton hat, bestimmt unter Anwendung von Gelpermeationschromatographie auf der Basis eines Polystyrolstandards.

**4.** Die thermoplastische Zusammensetzung gemäß einem beliebigen der Ansprüche 1-3, wobei der Elastifikator Folgendes umfasst: ein Ethylen-Propylen-Gummi; ein Maleinsäureanhydrid-Pfropfpolyethylen; ein Maleinsäureanhydrid-funktionalisiertes Copolymer; Acryl-Butadienkautschuk (acrylic rubber, ACR); Methylmethacrylat-Butadien-Styrol-Terpolymer (MBS); Ethylen-coglycidylmethacrylat (EGMA); Ethylen-methylacrylat mit Glycidylmethacrylat (EMAGMA); Styrol-Butadien-Styrol (SBS); Styrol-Ethylen-Butadien-Styrol (SEBS); ein Polyesteretherelastomer; Ethylenethylacrylat oder eine Kombination davon.

**5.** Die thermoplastische Zusammensetzung gemäß einem beliebigen der Ansprüche 1-4, wobei der Elastifikator ein Styrol-Ethylen-Butadien-Styrol (SEBS) umfasst, das mehr als 40 Gewichtsprozent eines Polystyrol-Blockcopolymers enthält.

**6.** Die thermoplastische Zusammensetzung gemäß einem beliebigen der Ansprüche 1 bis 5, wobei der anorganische Keramik-Füllstoff $TiO_2$, $BaTiO_3$, $SrTiO_3$, $CaTiO_3$, $MgTiO_3$, $Al_2O_3$, $ZrO_2$ oder eine Kombination davon umfasst.

**7.** Die thermoplastische Zusammensetzung gemäß einem beliebigen der Ansprüche 1 bis 5, wobei der anorganische Keramik-Füllstoff Titandioxid umfasst.

**8.** Die thermoplastische Zusammensetzung gemäß einem beliebigen der Ansprüche 1 bis 7, wobei die thermoplastische Zusammensetzung eine Dielektrizitätskonstante Dk aufweist, die höher als 3,5 ist, beobachtet bei einer Frequenz von 1,1 GHz nach einem Hohlraumresonatorverfahren.

**9.** Die thermoplastische Zusammensetzung gemäß einem beliebigen der Ansprüche 1 bis 8, wobei die thermoplastische Zusammensetzung eine dielektrische Verlusttangente Df von weniger als 0,0003 aufweist, beobachtet bei einer Frequenz von 1,1 GHz nach einem Hohlraumresonatorverfahren.

**10.** Die thermoplastische Zusammensetzung gemäß einem beliebigen der Ansprüche 1 bis 8, wobei die thermoplastische Zusammensetzung eine dielektrische Verlusttangente Df von weniger als 0,0002 aufweist, beobachtet bei einer Frequenz von 1,1 GHz nach einem Hohlraumresonatorverfahren.

**11.** Die thermoplastische Zusammensetzung gemäß einem beliebigen der Ansprüche 1 bis 10, wobei die thermoplastische Zusammensetzung bei einem Test nach ISO 75 eine Wärmeformbeständigkeit von mehr als 170°C aufweist.

**12.** Die thermoplastische Zusammensetzung gemäß einem beliebigen der Ansprüche 1 bis 11, wobei die thermoplastische Zusammensetzung weiter mindestens einen zusätzlichen Zusatzstoff umfasst, wobei dieser einen Füllstoff, einen Säurefänger, ein Antitropfmittel, Antioxidans, Antistatikum, ein Kettenverlängerungsmittel, einen Farbstoff, ein Entformungsmittel, eine Fließhilfe, ein Schmiermittel, ein Formtrennmittel, einen Weichmacher, ein Löschmittel, ein Flammverzögerungsmittel, einen UV-reflektierenden Zusatzstoff oder Kombinationen davon umfasst.

**13.** Ein Gegenstand, geformt aus der thermoplastischen Zusammensetzung gemäß einem beliebigen der Ansprüche 1 bis 12.

**14.** Der Gegenstand gemäß Anspruch 13, wobei der Gegenstand eine dielektrische Platte für einen Phasenschieber ist.

## Revendications

1. Composition thermoplastique comprenant :

   a. de 10 % en poids à 60 % en poids d'un premier oxyde de polyphénylène (PPO), le premier PPO ayant une viscosité intrinsèque de 0,3 dl/g à 0,5 dl/g telle que mesurée à 25 °C dans du chloroforme à l'aide d'un viscosimètre ;
   b. de 0,5 % en poids à 10 % en poids d'un second PPO ayant un faible degré de polymérisation et une viscosité intrinsèque comprise entre 0,1 dl/g et 0,3 dl/g telle que mesurée dans du chloroforme à 25 °C à l'aide d'un viscosimètre ;
   c. de 0,5 % en poids à 10 % en poids d'un polystyrène à usage général (GPPS) ;
   d. de 0,5 % en poids à 10 % en poids d'un modificateur d'impact ; et
   e. de 30 % en poids à 70 % en poids d'une charge céramique inorganique,

   dans laquelle un rapport du premier PPO et du second PPO au polystyrène est de 1:1 à 6:1, et dans laquelle la valeur combinée en pourcentage en poids de tous les composants ne dépasse pas 100 % en poids, et toutes les valeurs en pourcentage en poids sont basées sur le poids total de la composition.

2. Composition thermoplastique selon la revendication 1, dans laquelle le premier PPO a un degré élevé de polymérisation.

3. Composition thermoplastique selon la revendication 1 ou 2, dans laquelle le second PPO a un poids moléculaire moyen en nombre inférieur à 10 000 Daltons tel que déterminé à l'aide d'une chromatographie par perméation de gel basée sur un étalon de polystyrène.

4. Composition thermoplastique selon l'une quelconque des revendications 1 à 3, dans laquelle le modificateur d'impact comprend : un caoutchouc éthylène-propylène ; un polyéthylène greffé avec de l'anhydride maléique ; un copolymère fonctionnalisé avec de l'anhydride maléique ; un caoutchouc acrylique (ACR) ; un terpolymère méthacrylate de méthyle-butadiène-styrène (MBS) ; un éthylène-co-méthacrylate de glycidyle (EGMA) ; un éthylène-acrylate de méthyle avec du méthacrylate de glycidyle (EMAGMA) ; un styrène-butadiène-styrène (SBS) ; un styrène-éthylène-butadiène-styrène (SEBS) ; un élastomère d'éther de polyester ; un éthylène-acrylate d'éthyle ; ou une combinaison de ceux-ci.

5. Composition thermoplastique selon l'une quelconque des revendications 1 à 4, dans laquelle le modificateur d'impact comprend un styrène-éthylène-butadiène-styrène (SEBS) ayant plus de 40 pour cent en poids d'un copolymère séquencé de polystyrène.

6. Composition thermoplastique selon l'une quelconque des revendications 1 à 5, dans laquelle la charge céramique inorganique comprend $TiO_2$, $BaTiO_3$, $SrTiO_3$, $CaTiO_3$, $MgTiO_3$, $Al_2O_3$, $ZrO_2$, ou une combinaison de ceux-ci.

7. Composition thermoplastique selon l'une quelconque des revendications 1 à 5, dans laquelle la charge céramique inorganique comprend du dioxyde de titane.

8. Composition thermoplastique selon l'une quelconque des revendications 1 à 7, dans laquelle la composition thermoplastique présente une constante diélectrique Dk supérieure à 3,5 lorsqu'elle est observée à une fréquence de 1,1 GHz selon une méthode de cavité résonante.

9. Composition thermoplastique selon l'une quelconque des revendications 1 à 8, dans laquelle la composition thermoplastique présente une tangente de perte diélectrique Df inférieure à 0,0003 lorsqu'elle est observée à une fréquence de 1,1 GHz selon une méthode de cavité résonante.

10. Composition thermoplastique selon l'une quelconque des revendications 1 à 8, dans laquelle la composition thermoplastique présente une tangente de perte diélectrique Df inférieure à 0,0002 lorsqu'elle est observée à une fréquence de 1,1 GHz selon une méthode de cavité résonante.

11. Composition thermoplastique selon l'une quelconque des revendications 1 à 10, dans laquelle la composition thermoplastique présente une température de déformation à la chaleur supérieure à 170 °C lorsqu'elle est testée selon la norme ISO 75.

**12.** Composition thermoplastique selon l'une quelconque des revendications 1 à 11, dans laquelle la composition thermoplastique comprend en outre au moins un additif supplémentaire, dans laquelle l'au moins un additif supplémentaire comprend une charge, un agent piégeur d'acide, un agent anti-goutte, un antioxydant, un agent antistatique, un allongeur de chaîne, un colorant, un agent de démoulage, un agent facilité l'écoulement, un lubrifiant, un agent de libération du moule, un plastifiant, un agent de déactivation, un agent ignifuge, un additif réfléchissant les UV, ou des combinaisons de ceux-ci.

**13.** Article formé à partir de la composition thermoplastique selon l'une quelconque des revendications 1 à 12.

**14.** Article selon la revendication 13, dans lequel l'article est une plaque diélectrique pour un déphaseur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20180258282 A
- CN 108164973 A
- US 20090054553 A1
- EP 3546509 A
- CN 110698839
- EP 3591004 A
- US 2003125478 A